# EUROPÄISCHE PATENTANMELDUNG

(11) **EP 1 724 982 A1**
(43) Veröffentlichungstag der Anmeldung: **22.11.2006**
(21) Anmeldenummer: 05011006.3
(22) Anmeldetag: 20.05.2005
(51) Int. Cl.: H04L 29/06

(54) **Anordnung zur sicheren Datenübermittlung zwischen zwei Applikationen**

(71) Anmelder: Siemens Schweiz AG, 8047 Zürich (CH)
(72) Erfinder: Jeanneret, Gael, 8102 Oberengstringen (CH); Studer, Horst, CH-8002 Zürich (CH); Kollmann, Franz, CH-8047 Zürich (CH); Gmür, Roman, CH-5443 Niederrohrdorf (CH)
(74) Vertreter: Fischer, Michael

(57) **Zusammenfassung**

Erfindungsgemäss ist eine Anordnung zur sicheren Datenübermittlung zwischen zwei Applikationen (S₁, S₂) vorgesehen, wobei die Applikationen (S₁, S₂) logisch auf zwei mittels einer beliebigen Datenverbindung (GSC) koppelbare Datenverarbeitungssysteme (GN) verteilt sind, und wobei jedes Datenverarbeitungssystem (GN) einen Identitäts-Server (IC) und einen Kommunikationskontroller (GCC) umfassen, die mit folgender Funktionalität ausgestattet sind:
der Identitätsserver (IC) steuert für den Kommunikationskontroller (GCC) hinsichtlich der Datenübermittlung Übertragungsattribute, wie z.B. die Authentifizierung (Aut) und/oder die Autorisation (Auth) und/oder das Auditing (Aud) und und/oder das Identitätsmanagement (IPH, IDH);
der Kommunikationskontroller (GCC) managt die Datenverbindung (GSC) zum jeweils anderen Kommunikationskontroller (GCC);
der Kommunikationskontroller (GCC) kennt aufgrund der vom Identitätsserver (IC) erhaltenen Übertragungsattribute die Attribute der erwarteten Antwort auf eine ausgesendete Datenübermittlung und quittiert die Datenübermittlung erst dann als erfolgreich, wenn die Antwort mit den erwarteten Attributen von dem jeweils anderen Kommunikationscontroller (GCC) in Antwort auf die Datenübermittlung zurückgesendet worden ist.

Auf diese Weise bleibt es der Anordnung nicht unverborgen, wenn eine Datenübermittlung auf dem Weg über das öffentliche Kommunikationsnetz ganz verloren geht, korrumpiert wird oder an sonst wie gelagerten Übertragungsmängeln leidet oder die andere empfangende Applikation nicht zum Empfang bereit ist. Auf diese Weise wird sichergestellt, dass zum Beispiel personenbezogene Daten in E-Government-Anwendungen (A2A, A2B und/oder A2C) auch sicher die empfangende Applikation erreicht haben und dort entsprechend verarbeitet werden können.

## Beschreibung

Die vorliegende Erfindung betrifft eine Anordnung zur sicheren Datenübermittlung zwischen zwei Applikationen, wobei die Applikationen logisch auf zwei mittels einer beliebigen Datenverbindung koppelbare Datenverarbeitungssysteme verteilt sind.

Die vorliegende Erfindung betrifft das Gebiet der Informations- und Kommunikationstechnologie. Bedingt durch die sehr vielfältigen Anforderungen sind in integrierten Systemen Computer und zugeordnete Anwendungen von verschiedensten Herstellern zu vernetzen. Ein besonderes Augenmerk wird dabei in letzter zeit auf verschiedene Projekte, insbesondere unter dem Dach der europäischen Union, gelegt, die die Machbarkeit und Einführung von sogenanne E-Government-Applikationen zum Ziel haben. Schlagwörter für derartige Applikationen sind u.a. A2A (Administration zu Administration), A2B (Administration to Business) und A2C (Administration to Customer). Derartige Applikation beschäftigen sich immer mit der vereinfachung von Verwaltungsprozessen, die zukünftig vor allem durch einen direkten elektronische Zugriff auf die entsprechenden Applikation (WEB-Applikation) gekennzeichnet sein soll. Beispielhaft hierfür kann das E-voting, E-Tax usw. genannt werden.

Vom Gremium OMG wurde dazu als eine mögliche Lösungsmöglichkeit die Architektur CORBA spezifiziert, über die die verschiedenen Anwendungen kommunizieren können. Sogenannte CORBA Applikationen bestehen aus einem oder mehreren Objekten, die ein Abbild eines oder mehrer realer Vorgänge - eine Funktion und zugeordnete Daten - repräsentieren. Jedem Objekt ist dabei ein Typ zugeordnet. Üblicherweise gibt es mehrere Instanzen eines Objektes. Eine E-Commerce Web-Applikation besteht aus denjenigen Instanzen, die dem Warenkorb der momentanen Anwender bzw. Kunden dieser Web-Applikation entsprechen.

Für jeden Objekttyp ist abhängig von der jeweiligen Laufumgebung eine Schnittstellendefinition notwendig. Die Applikationen haben auf CORBA-Vorgaben abgestützte Schnittstellen, welche in der CORBA-IDL (Interface Definition Language) definiert und dann in die verschiedenen Implementationssprachen der Zielsysteme übersetzt und implementiert werden. Der grosse Vorteil der CORBA basierten Produkte ist dabei die sprachenübergreifende, plattformübergreifende und für heterogene Systeme geeignete Funktionsweise.

In der Praxis hat sich gezeigt, dass die vorgenannte Architektur einen Datenaustausch zwischen verschiedenen Datenquellen und Datensenken auf zuverlässige und zweckmässige Weise erlauben und zwar gerade dann, wenn die betreffenden Schnittstellen hochgradig proprietär sind. Nachteilig ist jedoch, dass für neue anzubindende Applikation ein grosser Aufwand geleistet werden muss.

Diese Nachteile werden mit der in der internationalen Patentanmeldung WO 2004/063930 behoben. Zu beachten bleibt jedoch bei dieser Art von Architektur, dass die vorgesehene Architektur und das dazugehöriges Verfahren zur Datenübermittlung zwischen proprietären Datenquellen und Datensenken geschaffen wurde. Es ist daher der Ansatz nicht vollständig berücksichtigt worden, dass für an verschiedenen Orten lokalisierte Applikationen, die über ein öffentliches Telekommunikationsnetz miteinander kommunizieren müssen, mit dieser Vorrichtung und diesem verfahren ohne zusätzliche Schutzmassnahmen, wie die Verschlüsselung, nicht wirklich ein sicherer Datenaustausch der Applikationen erzielt werden kann.

Der Erfindung liegt daher die Aufgabe zugrunde eine Anordnung anzugeben, die es ermöglicht, dass Applikationen, die an verschiedenen Orten ausgeführt werden, ihre Daten miteinander auch über ein öffentliches Telekommunikationssystem sicher austauschen können.

Diese Aufgabe wird erfindungsgemäss durch eine Anordnung zur sicheren Datenübermittlung zwischen zwei Applikationen gelöst, wobei die Applikationen logisch auf zwei mittels einer beliebigen Datenverbindung koppelbare Datenverarbeitungssysteme verteilt sind, und wobei jedes Datenverarbeitungssystem einen Identitäts-Server und einen Kommunikationskontroller umfasst, die mit folgender Funktionalität ausgestattet sind:
der Identitätsserver steuert für den Kommunikationskontroller hinsichtlich der Datenübermittlung Übertragungsattribute, wie z.B. die Authentifizierung und/oder die Autorisation und/oder das Auditing und und/oder das Identitätsmanagement;
der Kommunikationskontroller managt die Datenverbindung zum jeweils anderen Kommunikationskontroller;
der Kommunikationskontroller kennt aufgrund der vom Identitätsserver erhaltenen Übertragungsattribute die Attribute der erwarteten Antwort auf eine ausgesendete Datenübermittlung und quittiert die Datenübermittlung erst dann als erfolgreich, wenn die Antwort mit den erwarteten Attributen von dem jeweils anderen Kommunikationskontroller in Antwort auf die Datenübermittlung zurückgesendet worden ist.

Auf diese Weise gelingt es mit dem Einsatz der Kommunikationskontroller sowie der diese mit die Applikation kennzeichnenden Daten versorgenden Identitätsserver, dass eine Datenübermittlung von einer Applikation zur der jeweils anderen Applikation als erfolgreich quittiert wird, wenn die von dem Identitätsserver vorgegebene Antwort auf tatsächlich bei dem die ursprüngliche Information aussendenden Kommunikationskontroller eintrifft. Auf diese Weise bleibt es der Anordnung nicht unverborgen, wenn eine Datenübermittlung auf dem Weg über das öffentliche Kommunikationsnetz ganz verloren geht, korrumpiert wird oder an sonst wie gelagerten Übertragungsmängeln leidet oder die andere empfangende Applikation nicht zum Empfang bereit ist. Auf diese weise wird sichergestellt, dass zum Beispiel personenbezogene Daten in E-Government-Anwendungen (A2A, A2B und/oder A2C) auch sicher die empfangende Applikation erreicht haben und dort entsprechend verarbeitet werden können.

In einer vorteilhaften Ausgestaltung der Erfindung kann der Kommunikationskontroller so konfiguriert sein, dass er nach einer Datenübermittlung bei Ausbleiben der Antwort mit den erwarteten Attributen nach einer vorgebbaren Zeit die Datenübermittlung wiederholt. Auf diese Weise ist es möglich, dass der Kommunikationskontroller selbst entscheiden kann, wann und wie oft er versuchen wird, die gewünschte Nachricht zu übertragen.

Eine weitere vorteilhafte Ausgestaltung der Erfindung kann es vorsehen, dass der Kommunikationskontroller eine erhaltene Datenübermittlung auf deren Zulässigkeit prüft und eine von ihm als zulässig eingestufte Datenübermittlung an einen Servicecontroller übermittelt, der überprüft, ob die Datenübermittlung zu einer von ihm gesteuerten Applikation gehörig einstufbar und daher dorthin weiter zu leiten ist. Auf diese weise kann eine zweistufige Behandlung der Nachricht erfolgen, die unabhängig von ihrem gewünschten Inhalt zunächst auf Integrität geprüft und erst dann an den Servicecontroller weitergeleitet wird. Der Servicekontroller übernimmt dabei dann die entsprechende Zuordnung der Übertragung zu einer Applikation, so dass der Kommunikationskontroller nicht im Einzelnen wissen muss, für welche Applikation die Datenübertragung bestimmt ist.

Weiter kann der Kommunikationskontroller so ausgestaltet sein, dass er mittels von dem Identitätsserver erhaltenen Daten prüft, ob die erhaltene Antwort inhaltlich und/oder vom Aufbau her einer erwarteten Antwort entspricht. Diese Überprüfungsmöglichkeit ertüchtigt die Anordnung daher dahingehend, dass besonders eine Korrumpierung der Daten auf dem Datenweg sicher vermieden werden kann, weil beispielsweise ein bestimmter Aufbau von Datenrahmen und bestimmte geforderte Felder für die Entschlüsselung/Autorisierung/Identifizierung usw. von dem Kommunikationskontroller verlangt wird, damit dieser die Datenübertragung nicht nur einfach blockt und damit für die Applikation nicht entgegen nimmt.

Vorteilhafte Ausgestaltungen der Erfindung sind in weiteren Ansprüchen angegeben.

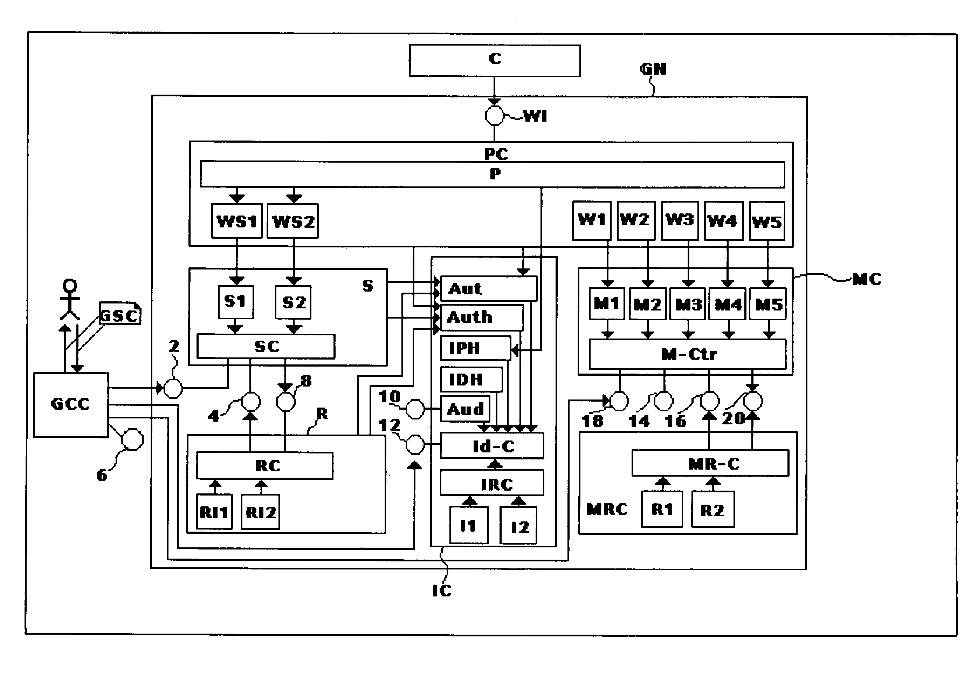

Die Erfindung wird nachfolgend anhand einer Zeichnung beispielsweise näher erläutert. Dabei zeigt die Figur eine schematische Übersicht über eine allgemein nutzbare IT-Plattform GN (GN = Grid Node), die sicher und beliebig ausdehnbar ist und die Fähigkeit hat, in einem breiten Feld von Anwendungen eingesetzt werden zu können. Die Plattform GN liefert verschiedene nachfolgend beschriebene Container, die das Umfeld für die Systemkomponenten, wie Benutzer-Interfaces, Management, Sicherheit und Kommunikation zwischen derartigen Plattformen, liefern.

Der erste Container, mit dem ein Benutzer C in Berühung kommt, ist der Präsentationscontainer PC, der alle Interfaces bietet, die der GN für den Benutzer C benötigt. Der Präsentations container PC unterstützt allgemeine User Interfaces und verwaltende User Interfaces. Der Präsentationscontainer PC macht ausserdem intensiv von einem Identitätscontainer IC Gebrauch, der für die meisten von dem GN angebotenen Sicherheitsaspekte verantwortlich ist.

Der Identitätscontainer IC ist für sicherheitsbezogene Aufgaben verantwortlich, wie zum Beispiel Authentifikation und Authorisation. Alle übrigen Container des GN machen von dieser Identitätsinfrastruktur Gebrauch.

Der Container, mit welchem das allgemeine Benutzer Interface zusammenwirkt, ist der Servicecontainer S. Dieser Servicecontainer S beinhaltet die verschiedenen Dienste S₁, S₂, die die eigentliche Funktionalität des GN ausmachen. Für jede Art von Kommunikation verwendet der Servicecontainer S einen Kommunikationskontroller GCC. um mit existierenden oder externen Systemen zusammenwirken zu können, wird ein in einem Ressourcencontainer R umfasster Ressourcenintegrator RI₂ verwendet.

Der Kommunikationskontroller GCC stellt sozusagen das Untersystem des GN für dessen externe Kommunikation dar. Der GCC liefert dem GN die Möglichkeit mit anderen GN's in sicherer Weise zu kommunizieren. Der GCC kommuniziert mit diesen anderen Systemen über einen sicheren Kanal GSC, der als sichere Verbindung zwischen zwei Systemen angesehen werden kann und vom GCC hergestellt wird.

Ein Managementcontainer MC arbeitet einerseits mit dem verwaltenden Benutzer Interface und andererseits mit den übrigen Komponenten des GN's zusammen. Fünf Management-Dienste M₁ bis M₅ werden innerhalb des GN's angeboten; es sind Fehler-, Konfigurations-, Verrechnungs-, Performance- und Sicherheits-Management.

Nachfolgend werden die Komponenten des GN's näher beschrieben um ihr zusammenwirken besser erläutern zu können.

Der Benutzer C erreicht den Präsentationscontainer PC über ein darin umfasstes Web-Interface WI. Austausch mit dem Benutzer C findet über ein Portal P statt, das dem Benutzer C mittels SSL Verbindung dargestellt wird. Die Präsentation der verschiedenen Dienste S₁, S₂ werden von dem Portal P bereitgestellt. Der Präsentationscontainer PC umfasst daher die folgenden Teile:
Portal P;
Web User Interface WI;
Site Management web user interface mit
   Fehler Management W₁;
   Konfigurations-Management W₂;
   Verrechnungs-Management W₃;
   Performance Management W₄; und
   Sicherheits-Management W₅.

Authentifikation und Authorisation finden auch in dem Präsentationscontainer PC statt. Die Authentifikation basiert auf einer Private Key Infrastructure (PKI), die deren Zertifikate über eine SSL Verbindung nutzt. Die Authorisation wird durch eine ausdrückliche rollenbasierte Sicherheit nach J2EE vorgenommen.

Alle vom GN angebotenen Dienste S₁, S₂ sind in dem Service Container S umfasst. Jeder Dienst umfasst die Logik und den Arbeitsfluss, die erforderlich sind, um die zugehörige Aufgabe erfüllen zu können. Der Service Container S umfasst die folgenden Teile:
Die Dienste S₁, S₂;
Einen Servicecontroller SC;
Einen Grid Service Access Point (GSAP) 2; und
Einen Ressource Service Access Point (RSAP) 4.

Die Kommunikation zwischen dem Servicecontroller SC und dem Kommunikationscontroller GCC findet über den Grid Service Access Point 2 und einen Grid Access Point 6 statt. Diese Access Punkte werden in JMS queues realisiert, die für die zuverlässige Übertragung verantwortlich sind. Die Access Punkte zwischen dem Service Controller SC und einem Ressourcen Controller RC sind in gleicher weise realisiert (RSAP 4 und RAP 8). Der Service Controller SC steuert die Kommunikation der Dienste S₁, S₂, wobei die Logik, die erforderlich ist um zu entscheiden, ob eine Meldung zu dem

Ressourcencontroller RC oder dem ommunikationskontroller GCC zu richten ist, in dem Sercivecontroller SC angeordnet ist. Von den Diensten erhaltene Meldungen können daher für in anderen GN's angeordnete Dienste oder weitere externe Ressourcen bestimmt sein. Deshalb hat der Servicecontroller SC Zugang zu dem Kommunikationscontroller GCC und dem Ressourcencontroller RC via den Grid Access Point 6 bzw. den Ressource Access Point 8.

Sicherer Datenaustausch zwischen verschiedenen GN's wird mittels des Kommunikationscontrollers GCC über den sicheren Kanal GSC erzielt. Der Kommunikationscontroller GCC dient als Wandler für eintreffende und ausgehende Meldungen. Der GCC wandelt und platziert die Meldungen in ein Transportprotokoll. Der GCC ist weiter verantwortlich, den Zugang zu einem GN zu steuern; er blockt zum Beispiel Meldungen, die von nicht-authorisierten Systemen erhalten wurden.

Der GCC umfasst die folgenden Teile:
Andere GN's als Kommunikationspartner;
Die eigentliche Kommunikationssteuerung; und
Den Grid access point (GAP) 6.

Der GCC nutzt weiter die Web Services Security (Digitale Signatur und Verschlüsselung einer Meldung) um die Meldungen in sicherer weise zu versenden. Für die Aussendung von Meldungen ist der GCC nun dank des Identitätscontainers IC so konfiguriert, dass er die Meldung eines auf einem anderen GN laufenden Dienstes kennt, wenn dieser GN die ausgesendete Meldung tatsächlich erhalten hat.

Zur Integration von externen Ressourcen wird der Ressourcencontainer R verwendet. Verschiedene Ressourcen Integratoren RI₁, RI₂ werden verwendet um fremde Protokolle zu übersetzen und so die Kommunikation mit diesen externen

Ressourcen zu erlauben. Auch hier spielt wieder die Authentifikation und Authorisation eine Rolle, um nichtangeforderten Zugang zu blocken. Der Ressourcencontroller RC entscheidet, welcher Ressourcenintegrator RI₁, RI₂ auf eine bestimmte Anfrage angesetzt wird. Er kennt alle mit dem GN verbundenen externen Ressourcen sowie die von diesen unterstützten Protokolle.

Die Sicherheit ist natürlich eine der Schlüsselpunkte der Kommunikation von verschiedenen GN's. Die Dienste für das Sicherheits- und das Identitätsmanagement sind in dem Identitäts Container IC umfasst.

Der Identitätscontainer IC umfasst die folgenden Teile:
Eine Authentifikationskomponente Aut;
Eine Authorisationskomponente Auth;
Einen Identitätsprofilverwalter IPH;
Einen Identitätsdomänenverwalter IDH;
Eine Auditkomponente Aud;
Eine Identitätssteuerung Id-C;
Einen Identitätsressourcen Controller IRC;
Einen Satz von Identitätsressourcen Integratoren I₁, I₂;
Einen Auditing Access Point (AAP) 10; und
Einen Grid Identity Access Point (GIAP) 12.

Wann immer sich ein Benutzer C über das Web Interface WI einloggen will, muss dieser Benutzer authentifiziert werden. Genauso wird, wenn immer eine Meldung an dem GCC ankommt, die Identität des Senders festgestellt. Dieser Dienst zur Authentifizierung wird mittels der Authentifikationskomponente Aut bereitgestellt. Wenn nun eine Identität von einer fremdem Identitätsdomäne den Zugang zu einem lokalen GN beantragt (zum Beispiel durch einen Single-sign-on request oder druch einen direkten login request in den lokalen GN), prüft die Authentifikationskomponente Aut das Vertrauensverhältnis zwischen diesen beiden Domänen via den Identitätsdomänenverwalter IDH und falls dort eine entsprechende vertrauensvolle Beziehung besteht, wird die fremde Domäne aufgefordert, deren Identität zu authentifizieren und bestimmte Identitätsattribute von dessen Identitätsprofil zu liefern. Ist die Authentifizierung erfolgreich, erzeugt die Authentifikationskomponente Aut eine temporäre lokale Identität, die die fremde Identität in dem GN repräsentiert.

Die Authorisationskomponente Auth ist nun verantwortlich all die Daten zu liefern, die notwendig sind, um bestimmen zu können, welche Aktivitäten der Benutzer, sei es ein anderer GN oder eine Person, auf diesem GN entfalten darf. Die tatsächliche Durchsetzung der Authorisierungspolitik wird durch Enterprise Java Beans (EJB) Container ausgeführt, die den Standard J2EE Security Mechanisms für die Durchsetzung der Authorisationspolitik nutzen.

Der Identitätsprofilverwalter IPH ermöglicht den Zugang zu allen Identitätsdaten, die mit einer Identität verknüpft sind. Diese zdentitä.tsdaten umfassen auch die Daten, die in dem Authentifizierungs- und Authorisierungsprozess erforderlich sind und können auch weitere Attribute zu einer Identität enthalten.

Der Identitätsdomänenverwalter IDH managt die Vertrauensbeziehung zwischen fremden Identitätsdomänen. Diese Vertrauensbeziehung ermöglicht es den fremden Identitäten gewisse Vorrechte in einem lokalen GN zu erhalten, und zwar abhängig von der Rolle, die die Identität in ihrer eigenen fremden Identitätsdomäne innehat. Die Auditkomponente Aud nimmt Auditdaten auf, um die Aktivitäten des Benutzer (System oder Person) auf diesem GN genau zu überwachen. Der Identitätscontroller ID-C ermöglicht es dem Identitäts Container IC von anderen GN's via Kommunikation über den sicheren Kanal GSC betreten zu werden.

Der Management Container MC ist von Natur aus Teil eines jeden GN. Er wird für zahlreiche Management-Funktionalitäten genutzt, die von dem GN angeboten werden:
Fault Management M₁;
Konfigurations Management M₂ ;
Verrechnungs Management M₃;
Performance Management M₄; und
Sicherheits Management M₅.

Für die Fehlererkennung und die Verrechnung senden die verschiedenen Komponenten des GN Logging-Informationen über ihren internen Management-Agenten zum dem Management Controller M-Ctr. Hier wird die Information gefiltert und analysiert, um die Fehlerlog- oder Verrechnungsinformation aufzufinden. Diese Information wird von den jeweiligen Management-Agenten der Komponenten über einen Management agent access point (MAAP) 14 an den Management Controller M-Ctr gesendet. Alle Management-Dienste haben über die jeweiligen Management-Agenten Zugang zu den einzelnen Container um die in diesen Container enthaltenen Komponenten zu steuern, zu konfigurieren und/oder zu überwachen.

Der Management Container MC umfasst hierzu die folgenden Komponenten:
Den Management Controller M-Ctr;
Die verschiedenen Management-Dienste M₁ bis M₅;
Den Ressource management access point 16; und
Den Grid management access point 18.

Der Site management Dienst benutzt die Java Management Extensiorl (JMX) um die von dem GN angebotenen Dienste und die hierzu erforderlichen Komponenten zu steuern, zu konfigurieren und/oder zu überwachen.

Der Management Controller MC implementiert drei Access Punkte, durch welchen er asynchron Meldungen erhält:
Ressource management access point (RMAP) 16;
Grid management access point (GMAP) 18; und
Management agent access point (MAAP) 16.

Der GMAP 18 ist für den Empfang von Meldungen vorgesehen, die von dem GCC stammen; der RMAP 16 empfängt von dem Management Ressourcen Controller MR-C stammende Meldungen und der MAAP 16 empfängt die Meldungen, die von den Management-Agenten der einzelnen Container stammen.

Ein Management Ressourcen Container MRC umfasst den eigentlichen Management Ressourcen Controller MR-C, verschiedene Management Ressourcen Integratoren R₁, R₂ und einen Management ressource access point (MRAP) 20. Die Management Ressourcen Integratoren R₁, R₂ sind Protokoll-Konvertierer, die die gesamte Logik umfassen, um mit externen Management Ressourcen zu kommunizieren.

Das web Interface WI stellt die Verbindung zwischen einem Web User C und dem Portal P dar. Das Web User Interface ist mit diesem Interface erstellt. Es arbeitet nach HTTPS (SSL).

Der Grid Access Point 6 ist der Hauptverkehrspunkt für ausgehende Meldungen. Alle Meldungen, deren Versand an andere Systeme vorgesehen ist, werden zu diesem Grid Access Point (GAP) 6 gesendet. Der GAP 6 wird durch Mittel einer JMS queue gestaltet, die für die von dem GN angebotene zuverlässige Übermittlung verantwortlich ist. Der GAP 6 kann als zum GCC gehörig betrachtet werden und arbeitet nach den Protokollen W3C WS, W3C WSA, W3C WSS, Sun JMS (z.B. JbossMQ).

Der sichere Kanal GSC ist das Kommunikationsinterface zwischen verschiedenen GCC's. Der GSC wird genutzt um mit fremden (externen) GN's in einer sicheren und zuverlässigen Weise zu kommunizieren. Er nutzt SOAP over HTTP als Protokoll.

Der Grid Service Access Point (GSAP) 2 ist für den GN der Hauptzugangspunkt für eingehende Meldungen. Alle von anderen Systemen desselben Typs erhaltene Meldungen werden über diesen Zugangspunkt empfangen. Der GSAP 2 wird als JMS queue ausgebildet, die mit von anderen Systemen erhaltenen Meldungen aufgefüllt wird. Der GSAP 2 kann als zum Service Controller gehörend betrachtet werden. Alle Meldungen, die in dieser Schleife platziert werden, stammen von dem GCC. Der GSAP 2 nutzt die Protokolle W3C WS, W3C WSA, W3C WSS, Sun JMS (z.B. JbossMQ).

Der Grid Identity Access Point (GIAP) 12 wird von dem GCC genutzt, um Meldungen an den Identitäts Controller IC zu senden. Der GIAP 12 empfängt die Meldungen von externen GN's und leitet diese and den Identitäts Controller Id-C weiter. Der Identitäts Controller Id-C entscheidet dann, wie mit dieser Meldung weiter verfahren werden soll. Damit ist auch der GIAP 12 bzw. dessen ausgeführte Logik besonders wichtig, um den Empfang unzulässiger Meldungen zu blocken.

## Patentansprüche

1. Anordnung zur sicheren Datenübermittlung zwischen zwei Applikationen (S₁, S₂) , wobei die Applikationen (S₁, S₂) logisch auf zwei mittels einer beliebigen Datenverbindung (GSC) koppelbare Datenverarbeitungssysteme (GN) verteilt sind,
**dadurch gekennzeichnet, dass**
jedes Datenverarbeitungssystem (GN) einen Identitäts-Server (IC) und einen Kommunikationskontroller (GCC) umfassen, die mit folgender Funktionalität ausgestattet sind:
der Identitätsserver (IC) steuert für den Kommunikationskontroller (GCC) hinsichtlich der Datenübermittlung Übertragungsattribute, wie z.B. die Authentifizierung (Aut) und/oder die Autorisation (Auth) und/oder das Auditing (Aud) und und/oder das Identitätsmanagement (IPH, IDH);
der Kommunikationskontroller (GCC) managt die Datenverbindung (GSC) zum jeweils anderen Kommunikationskontroller (GCC);
der Kommunikationskontroller (GCC) kennt aufgrund der vom Identitätsserver (IC) erhaltenen Übertragungsattribute die Attribute der erwarteten Antwort auf eine ausgesendete Datenübermittlung und quittiert die Datenübermittlung erst dann als erfolgreich, wenn die Antwort mit den erwarteten Attributen von dem jeweils anderen Kommunikationscontroller (GCC) in Antwort auf die Datenübermittlung zurückgesendet worden ist.

2. Anordnung nach Anspruch 1,
**dadurch gekennzeichnet, dass**
der Kommunikationskontroller (GCC) so konfiguriert ist, dass er nach einer Datenübermittlung bei Ausbleiben der Antwort mit den erwarteten Attributen nach einer vorgebbaren Zeit die Datenübermittlung wiederholt.

3. Anordnung nach Anspruch 1 oder 2,
**dadurch gekennzeichnet, dass**
der Kommunikativnskontroller (GCC) eine erhaltene Datenübermittlung auf deren Zulässigkeit prüft und eine von ihm als zulässig eingestufte Datenübermittlung an einen Servicecontroller (SC) übermittelt, der überprüft, ob die Datenübermittlung zu einer von ihm gesteuerten Applikation (S₁, S₂) gehörig einstufbar und daher dorthin weiter zu leiten ist.

4. Anordnung nach einem der Ansprüche 1 bis 3,
**dadurch gekennzeichnet, dass**
der Kommunikationskontroller (GCC) mittels von dem Identitätsserver (IC) erhaltenen Daten prüft, ob die erhaltene Antwort inhaltlich und/oder vom Aufbau her einer erwarteten Antwort entspricht.
